# EUROPÄISCHE PATENTSCHRIFT

(11) **EP 2 632 767 B1**
(45) Veröffentlichungstag und Bekanntmachung des Hinweises auf die Patenterteilung: **13.06.2018**
(21) Anmeldenummer: 11745704.4
(22) Anmeldetag: 13.08.2011
(51) Int. Cl.: B60R 16/023, G01D 7/00, G07C 5/12

(54) **ANZEIGEVORRICHTUNG UND VERFAHREN ZUM DARSTELLEN GRAFISCHER OBJEKTE, INSBESONDERE FÜR KRAFTFAHRZEUGE**
DISPLAY DEVICE AND METHOD FOR DISPLAYING GRAPHICAL OBJECTS, IN PARTICULAR FOR MOTOR VEHICLES
DISPOSITIF D'AFFICHAGE ET PROCÉDÉ DE REPRÉSENTATION D'OBJETS GRAPHIQUES, EN PARTICULIER POUR VÉHICULES AUTOMOBILES

(30) Priorität: 26.10.2010 DE 102010049720
(43) Veröffentlichungstag der Anmeldung: 04.09.2013
(73) Patentinhaber: Volkswagen AG, 38436 Wolfsburg (DE)
(72) Erfinder: MICHAELIS, Jan, 14193 Berlin (DE)
(86) Internationale Anmeldenummer: PCT/EP2011/004085
(87) Internationale Veröffentlichungsnummer: WO 2012/055453

(56) Entgegenhaltungen:
- EP-A2- 2 028 059
- EP-A2- 2 028 060
- EP-A2- 2 028 397
- DE-A1- 10 138 750
- Jeff Clark: "Multi Level Pie Charts", , 27. Juli 2006 (2006-07-27), XP002663039, Gefunden im Internet: URL:http://www.neoformix.com/2006/MultiLev elPieChart.html [gefunden am 2011-11-09]
- Anonymous: "Cheshire Ring", Wikipedia, the free encyclopedia , 4. Juni 2010 (2010-06-04), XP002663040, Gefunden im Internet: URL:http://en.wikipedia.org/wiki/Cheshire_ Ring [gefunden am 2011-11-08]
- Dror G. Feitelson: "Comparing Partitions With Spie Charts", , 31. August 2010 (2010-08-31), XP002663041, Gefunden im Internet: URL:http://www.cs.huji.ac.il/~feit/papers/ Spie03TR.pdf [gefunden am 2011-11-09]
- Anonymous: "Pie Chart", Wikipedia, the free encyclopedia , 8. November 2011 (2011-11-08), XP002663042, Gefunden im Internet: URL:http://en.wikipedia.org/wiki/Pie_chart [gefunden am 2011-11-09]
- Anonymous: "Kreisdiagramm", Wikipedia, der freien Enzyklopädie , 8. November 2011 (2011-11-08), XP002663043, Gefunden im Internet: URL:http://de.wikipedia.org/wiki/Kreisdiag ramm [gefunden am 2011-11-08]
- Anonymous: "Diagrammtypen", Microsoft Corporation , 2011, XP002663044, Gefunden im Internet: URL:http://mac2.microsoft.com/help/office/ 14/de-de/powerpoint/item/dfecbba6-a4cf-46b 2-a4cd-a60f30868cde?category=c8731707-4d2d -45b3-a10a-4155c0ac393b [gefunden am 2011-11-08]

## Beschreibung

Die Erfindung betrifft eine Anzeigevorrichtung für ein mit mehreren wahlweise zu- und abschaltbaren Komfortsystemen ausgestattetes Fahrzeug, insbesondere Kraftfahrzeug, mit einer Anzeigefläche zum Darstellen von grafischen Objekten und mit einer Steuereinheit zum Ansteuern der Anzeigefläche, wobei die Steuereinheit eingerichtet ist, Daten über Verbräuche der Komfortsysteme zu empfangen und aus diesen Daten Grafikdaten für die Verbräuche repräsentierende grafische Objekte für die Anzeigefläche zu erzeugen. Die Erfindung betrifft ferner ein Verfahren zum Darstellen grafischer Objekte auf einer Anzeigefläche in einem solchen Fahrzeug.

In modernen Kraftfahrzeugen sind zahlreiche Komfortsysteme verbaut, die vom Fahrer wahlweise zu- und abgeschaltet werden können. Der Begriff "Komfortsystem" wird im Rahmen dieser Erfindung weit verstanden. Komfortsysteme sind elektrisch betriebene Systeme, die für die Fortbewegung des Fahrzeuges nicht zwingend erforderlich sind, sondern in erster Linie dem Komfort der Insassen dienen. Zu den Komfortsystemen zählen etwa Klimaanlage, Scheibenheizungen, Lenkradheizung und Infotainmentsysteme (z.B. Navigationssystem, Radio, CD, DVD, Telefon).

Da all diese Systeme Stromverbraucher sind, sind sie zwangsläufig bei Zuschaltung entweder über die Batterie oder bei laufendem Fahrzeug über den Generator zu betreiben. Bei Fahrzeugen mit einer Brennkraftmaschine wird der Generator seinerseits durch die Brennkraftmaschine angetrieben. Je mehr Strom der Generator für den Betrieb der Komfortsysteme zur Verfügung stellen muss, umso höher ist der bezogen auf den Generatorbetrieb anfallende anteilige Kraftstoffverbrauch der Brennkraftmaschine. Dieser grundsätzliche Zusammenhang ist dem Fachmann bekannt, üblicher Weise jedoch nicht dem Fahrer selbst. Der Fahrer schaltet die Komfortsysteme zu, wenn er sie benötigt. Bisweilen vergisst er jedoch, die Komfortsysteme abzuschalten, wenn er sie nicht mehr benötigt. Hieraus resultiert zwangsläufig ein erhöhter Kraftstoffverbrauch oder bei Elektro- oder Hybridfahrzeugen eine höhere Belastung der Batterie. Demzufolge führt jedes zugeschaltete Komfortsystem zu einem erhöhten Verbrauch an Energie. Unter "Verbrauch" ist im Rahmen dieser Erfindung eine Verringerung der für den Betrieb (Fortbewegung, Komfortsysteme und dgl.) nutzbaren Energiequellen (z.B. Kraftstoff, Batterieladung) zu verstehen.

Um den Fahrer anzuregen, den Verbrauch durch Abschalten nicht mehr benötigter Komfortsysteme zu senken, ist es aus der EP 2 028 059 A2 bekannt, systemspezifische Verbrauchsanteile zu ermitteln und an einer Anzeigeeinrichtung auszugeben.

Der Erfindung liegt die Aufgabe zu Grunde, eine Anzeigevorrichtung und ein Verfahren der eingangs beschriebenen Arten zu schaffen, die den Fahrer auf einfache und intuitive Weise auf den Verbrauch durch Komfortsysteme aufmerksam machen, um ihn zu einem umweltbewussten Fahrverhalten anzuregen.

Die Aufgabe wird gelöst durch eine Anzeigevorrichtung mit den Merkmalen des Anspruchs 1 sowie ein Verfahren mit den Merkmalen des Anspruchs 5. Vorteilhafte Ausführungen und Weiterbildungen der Erfindung sind in den Unteransprüchen, der Beschreibung und den Figuren angegeben.

Dem Fahrer wird durch die erfindungsgemäße Anzeigevorrichtung eine einfache, verständliche und intuitive Informationsvermittlung über die Verbräuche seiner Komfortsysteme geboten. Er wird mit dem Umstand konfrontiert, dass mit dem Betrieb eines oder mehrerer Komfortsysteme ein tatsächlicher und ggf. auch zahlenmäßig angegebener Mehrverbrauch einhergeht. Aufgrund dieser anschaulichen Information kann der Fahrer zugeschaltete Komfortsysteme daraufhin überprüfen, ob er die momentan benötigt; wenn dies nicht der Fall ist, so wird er sie abschalten und den Energieverbrauch reduzieren. Damit stellt die vorliegende Erfindung einen sinnvollen Beitrag zu einer immer aktueller werdenden ökonomischen Fahrweise dar. Gemäß der Erfindung ist die ringförmige Figur als Kreisring ausgebildet, da ein Kreisring als einfacher geometrischer Körper einfach darzustellen ist und Informationen aus ihm leicht abzulesen sind.

Vorzugsweise verhält sich der Flächeninhalt des Abschnitts zu dem Flächeninhalt der ringförmigen Figur wie der Verbrauch des zugeschalteten Komfortsystems zu dem Gesamtverbrauch after Komfortsysteme. Damit erhält der Fahrer eine auch mit einem flüchtigen Blick einfach erfassbare bildhafte Information über den Anteil, den das betrachtete zugeschaltete Komfortsystem im Verhältnis zu den anderen Komfortsystemen am Energieverbrauch einnimmt. Der Fahrer kann so auf einfache Art für eine umweltbewusste Verwendung seiner Komfortsysteme sensibilisiert werden.

Eine einfache Vergleichbarkeit der zugeschalteten Komfortsysteme erhält der Fahrer in vorteilhafter Weise, wenn die grafischen Objekte dieser Komfortsysteme als Abschnitte der ringförmigen Figur ausgebildet sind. Gemäß der Erfindung ist wahlweise das grafische Objekt genau eines der zugeschalteten Komfortsysteme auf der Anzeigefläche darstellbar. Vorteilhaft ist es, wenn die grafischen Objekte aller zugeschalteten Komfortsysteme auf der Anzeigefläche darstellbar sind. Im ersten Fall wird der Fokus des Fahrers auf das dargestellte Komfortsystem gelenkt, im zweiten Fall erhält der Fahrer einen einfach Überblick darüber, welche Komfortsysteme im Vergleich zu anderen viel bzw. wenig Energie verbrauchen. Vorzugsweise werden die grafischen Objekte ortsfest auf der Anzeigefläche dargestellt, d.h. die Darstellung eines einem bestimmten Komfortsystem zugeordneten grafischen Objektes erfolgt sowohl in der Einzeldarstellung als auch in der Gesamtdarstellung an derselben Stelle auf der Anzeigefläche. Dies hat den großen Vorteil, dass sich der Fahrer nach einem Umschalten zwischen diesen Darstellungen nicht neu orientieren muss und die von ihm gewählten Informationen schnell und sicher ablesen kann. Gemäß der Erfindung wirkt die Anzeigevorrichtung derart mit einem oder mehreren Bedienelementen zusammen, dass zwischen den unterschiedlichen Verbrauchsinformationen umgeschaltet werden kann.

Das erfindungsgemäße Verfahren weist die gleichen Vorteile auf wie die erfindungsgemäße Anzeigevorrichtung, so dass auf die vorstehenden Ausführungen verwiesen wird.

Ein Ausführungsbeispiel der Erfindung wird anhand der beigefügten Zeichnungen erläutert. Es zeigen:
- Figur 1: eine Prinzipdarstellung eines erfindungsgemäßen Kraftfahrzeugs und
- Figuren 2 - 6: mehrere Darstellungen auf einer Anzeigefläche.

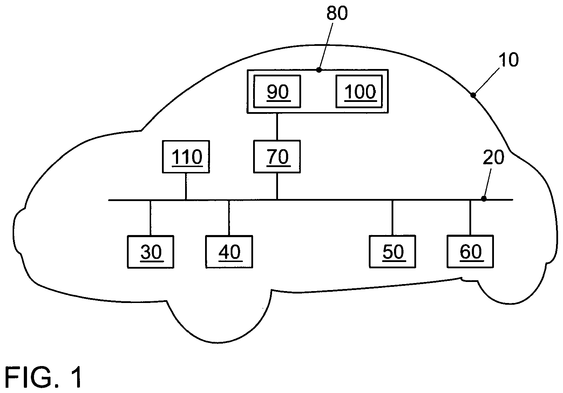

Figur 1 zeigt ein Kraftfahrzeug 10. Das Kraftfahrzeug 10 weist einen Bus 20 auf, der vorliegend als CAN-Bus ausgebildet ist. An den Bus 20 sind Komfortsysteme elektrisch angeschlossen. Vorliegend sind beispielhaft vier Komfortsysteme dargestellt, und zwar: eine Klimaanlage 30, ein elektrischer Fensteröffner 40, eine elektrische Sitzheizung 50 für den linken Vordersitz und eine Sitzheizung 60 für den rechten Vordersitz. An den Bus 20 ist eine Einrichtung 70 zum Ermitteln der Verbräuche der Komfortsysteme elektrisch gekoppelt.

Das Kraftfahrzeug 10 ist weiter mit einer Anzeigevorrichtung 80 ausgestattet. Die Anzeigevorrichtung 80 umfasst eine Steuereinheit 90 und eine Anzeigefläche 100. Die Anzeigevorrichtung 80 ist elektrisch mit der Einrichtung 70 gekoppelt. Die Steuereinheit 90 ist eingerichtet, Daten über Verbräuche der Komfortsysteme von der Einrichtung 70 zu empfangen und aus diesen Daten Grafikdaten für die Verbräuche repräsentierende grafische Objekte 120, 130, 140, 150, 160 für die Anzeigefläche 100 zu erzeugen. Die Anzeigefläche 100 ist als frei programmierbares Farbdisplay, z.B. als LCD-Bildschirm, ausgebildet. Die Anzeigevorrichtung 80 kann in ein Kombiinstrument integriert sein.

Die Komfortsysteme können über ein Bedienelement 110 wahlweise von einem Fahrer zugeschaltet und abgeschaltet werden. Die Steuersignale zum Zuschalten und Abschalten der Komfortsysteme werden über den Bus 20 an die Komfortsysteme gesendet.

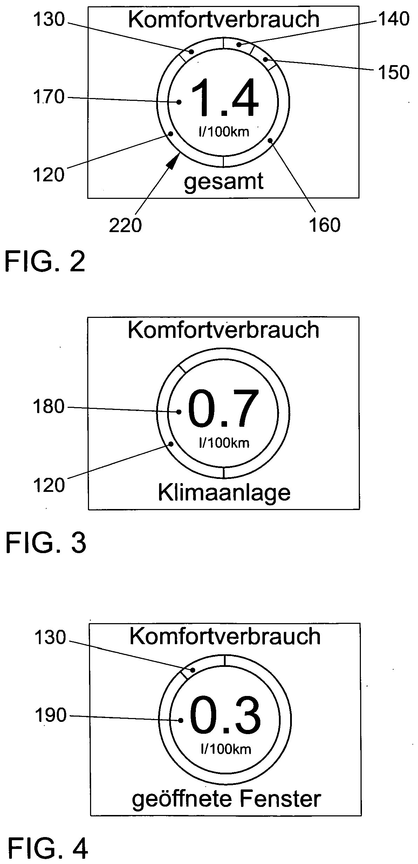

Die Figuren 2 bis 6 zeigen beispielhaft auf der Anzeigefläche 100 dargestellte grafische Objekte 120, 130, 140, 150, 160 und alphanumerische Informationen 170, 180, 190, 200.

Im Folgenden sei angenommen, dass die Klimaanlage 30, die Sitzheizung 50 für den linken Vordersitz und die Sitzheizung 60 für den rechten Vordersitz zugeschaltet sind. Darüber hinaus sei angenommen, dass das von einem Fensteröffner zu bedienende Fenster teilweise geöffnet ist.

In Figur 2 ist erkennbar, dass die grafischen Objekte 120, 130, 140, 150, 160 als Abschnitte eines Kreisringes 220 ausgebildet sind. Dabei repräsentiert das grafische Objekt 120 die Klimaanlage, das grafische Objekt 130 das geöffnete Fenster (also das Komfortsystem elektrisches Fenster), das grafische Objekt 140 die Sitzheizung 60 für den rechten Vordersitz und das grafische Objekt 150 die Sitzheizung 50 für den linken Vordersitz. Das grafische Objekt 160 repräsentiert weitere zugeschaltete Komfortsysteme, die jedoch nicht aufgeschlüsselt sondern zusammengefasst sind, um den Fahrer nicht mit zu vielen Einzelinformationen zu belasten.

Die zu den grafischen Objekten 120, 130, 140, 150 gehörenden Komfortsysteme hat der Fahrer zuvor ausgewählt. Alternativ kann auch die Anzeigevorrichtung diese Auswahl automatisch getroffen haben, beispielsweise indem nur die vier Komfortsysteme getrennt dargestellt werden, die am meisten Energie verbrauchen, wenn mehr als vier Komfortsysteme zugeschaltet sind.

Ferner ist in Figur 2 zu erkennen, dass im Zentrum des Kreisringes 220 ein Textfeld mit einer alphanumerischen Information 230 "1.4 l/100km" wiedergegeben ist. Diese alphanumerische Information 230 gibt an, dass der Gesamtverbrauch der dargestellten zugeschalteten Komfortsysteme 1,4 Liter Kraftstoff auf einhundert Kilometer verbrauchen. Weiter ist auf der Anzeigefläche 100 die Information "Komfortverbrauch" in einem weiteren Textfeld oberhalb des Kreisringes 220 dargestellt, die dem Fahrer einen Hinweis darauf gibt, dass er sich in einem Menü "Komfortverbrauch" befindet. Die weitere Information "gesamt" in einem Textfeld unterhalb des Kreisringes 220 gibt dem Fahrer zu verstehen, dass ihm die Verbräuche aller zugeschalteten Komfortsysteme angezeigt werden.

Die Flächeninhalte der Kreisringabschnitte sind proportional zu den ihn entsprechenden Verbräuchen (vgl. hierzu auch die Figuren 3 bis 6). Die grafischen Objekte 120, 130, 140, 150, 160 sind ohne gegenseitige Überlappung aneinandergereiht und bilden den Kreisring 220. Die grafischen Objekte 120, 130, 140, 150, 160 sind zudem unterschiedlich grafisch gestaltet, zum Beispiel haben sie unterschiedliche Farben und/oder Strukturen (etwa gestreift, gepunktet, kariert).

Durch ein oder mehrmaliges Betätigen des Bedienelementes 110, beispielsweise einer Lenkradwippe, kommt der Fahrer zu den in den Figur 3 bis 6 gezeigten Darstellungen.

In Figur 3 ist das grafische Objekt 120 optisch hervorgehoben gegenüber dem Rest des Kreisringes 220 dargestellt. Das grafische Objekt 120 hat dieselbe Größe und Anordnung wie in der Figur 2. Im Zentrum des Kreisringes 220 ist die alphanumerische Information "0.7 l/100km" angegeben, die andeutet, dass die Klimaanlage zurzeit 0,7 Liter Kraftstoff pro einhundert Kilometer verbraucht. Diese Angabe ist dabei nur ein auf einhundert Kilometer hochgerechneter Durchschnittswert aufgrund des zu diesem Zeitpunkt bzw. eines zuletzt für eine vordefinierte Zeitspanne ermittelten Verbrauches. Unter dem Kreisring 220 ist das Wort "Klimaanlage" eingeblendet, das angibt, dass sich die auf der Anzeigefläche 100 dargestellte Information auf die Klimaanlage 30 bezieht.

In Figur 4 ist das grafische Objekt 130 für den durch das geöffnete Fenster verursachten Verbrauch mit 0,3 l/100km angegeben. Auch hier ist wieder gut zuerkennen, dass der Abschnitt 130 genauso dargestellt ist, wie innerhalb der Gesamtdarstellung in Figur 2.

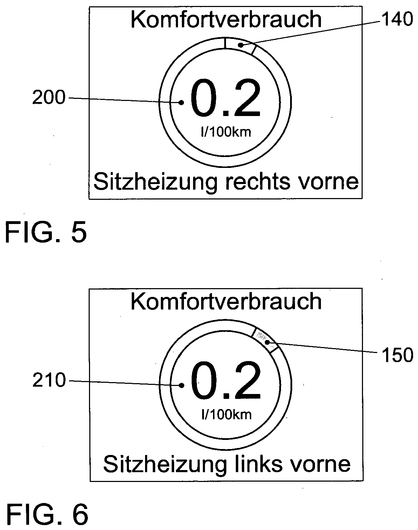

Figur 5 zeigt den Verbrauch für die Sitzheizung 60 des rechten Vordersitzes. Er beträgt 0,2 l/100km.

In Figur 6 ist schließlich der Verbrauch für die Sitzheizung 50 des linken Vordersitzes mit 0,2 l/100km angegeben.

Die übersichtlichen Darstellungen der Verbräuche der Komfortsysteme ermöglichen dem Fahrer ein schnelles und sicheres Ablesen und regen ihn an, über die Notwendigkeit eines oder mehrerer zugeschalteter Komfortsysteme nachzudenken. Damit trägt die erfindungsgemäße Verbrauchsinformation zu einem ökologischen Verhalten des Fahrers bei.

### Bezugszeichenliste

- 10: Kraftfahrzeug
- 20: Bus
- 30: Klimaanlage
- 40: Elektrischer Fensteröffner
- 50: Sitzheizung
- 60: Sitzheizung
- 70: Einrichtung
- 80: Anzeigevorrichtung
- 90: Steuereinheit
- 100: Anzeigefläche
- 110: Bedienelement
- 120-160: Grafische Objekte
- 170-210: Alphanumerische Informationen
- 220: Kreisring

## Patentansprüche

1. Anzeigevorrichtung für ein mit mehreren wahlweise zu- und abschaltbaren Komfortsystemen ausgestattetes Fahrzeug mit einer Anzeigefläche (100) zum Darstellen von grafischen Objekten (120, 130, 140, 150, 160) und mit einer Steuereinheit (90) zum Ansteuern der Anzeigefläche (100), wobei die Steuereinheit (90) eingerichtet ist, Daten über Verbräuche der Komfortsysteme zu empfangen und aus diesen Daten Grafikdaten für die Verbräuche repräsentierende grafische Objekte (120, 130, 140, 150, 160) für die Anzeigefläche (100) zu erzeugen, **dadurch gekennzeichnet, dass** das grafische Objekt (120, 130, 140, 150, 160) eines zugeschalteten Komfortsystems als Abschnitt einer als Kreisring (220) ausgebildeten ringförmigen Figur ausgebildet ist und wahlweise das grafische Objekt (120, 130, 140, 150, 160) genau eines der zugeschalteten Komfortsysteme optisch hervorgehoben gegenüber dem Rest des Kreisringes (220) auf der Anzeigefläche (100) darstellbar ist, wobei die Anzeigevorrichtung derart mit einem Bedienelement (110) oder mehreren Bedienelementen zusammenwirkt, dass zwischen den verschiedenen Verbrauchsinformationen umgeschaltet werden kann.

2. Anzeigevorrichtung nach Anspruch 1, **dadurch gekennzeichnet, dass** sich der Flächeninhalt des Abschnitts zu dem Flächeninhalt der ringförmigen Figur verhält wie der Verbrauch des zugeschalteten Komfortsystems zu dem maximalen Verbrauch aller Komfortsysteme oder zu dem Gesamtverbrauch aller Komfortsysteme.

3. Anzeigevorrichtung nach einem der vorstehenden Ansprüche, **dadurch gekennzeichnet, dass** die grafischen Objekte (120, 130, 140, 150, 160) aller zugeschalteten Komfortsysteme als Abschnitte der ringförmigen Figur ausgebildet sind.

4. Anzeigevorrichtung nach einem der vorstehenden Ansprüche, **dadurch gekennzeichnet, dass** wahlweise die grafischen Objekte (120, 130, 140, 150, 160) aller zugeschalteten Komfortsysteme auf der Anzeigefläche (100) darstellbar sind.

5. Verfahren zum Darstellen grafischer Objekte (120, 130, 140, 150, 160) auf einer Anzeigefläche (100) in einem mit mehreren wahlweise zu- und abschaltbaren Komfortsystemen ausgestatteten Fahrzeug, bei dem Daten über Verbräuche der Komfortsysteme empfangen werden, aus diesen Daten Grafikdaten für die Verbräuche repräsentierenden grafischen Objekte (120, 130, 140, 150, 160) erzeugt werden, mit diesen Grafikdaten die Anzeigefläche (100) angesteuert wird, **dadurch gekennzeichnet, dass** das grafische Objekt (120, 130, 140, 150, 160) eines zugeschalteten Komfortsystems als Abschnitt einer als Kreisring (220) ausgebildeten ringförmigen Figur ausgebildet wird und wahlweise das grafische Objekt (120, 130, 140, 150, 160) genau eines der zugeschalteten Komfortsysteme optisch hervorgehoben gegenüber dem Rest des Kreisringes (220) auf der Anzeigefläche (100) dargestellt wird, wobei die Anzeigevorrichtung derart mit einem Bedienelement (110) oder mehreren Bedienelementen zusammenwirkt, dass zwischen den verschiedenen Verbrauchsinformationen umgeschaltet werden kann.

6. Verfahren nach Anspruch 5, **dadurch gekennzeichnet, dass** sich der Flächeninhalt des Abschnitts zu dem Flächeninhalt der ringförmigen Figur verhält wie der Verbrauch des zugeschalteten Komfortsystems zu dem maximalen Verbrauch aller Komfortsysteme oder zu dem Gesamtverbrauch aller Komfortsysteme.

7. Verfahren nach einem der Ansprüche 5 oder 6, **dadurch gekennzeichnet, dass** die grafischen Objekte (120, 130, 140, 150, 160) aller zugeschalteten Komfortsysteme als Abschnitte der ringförmigen Figur ausgebildet werden.

8. Verfahren nach einem der Ansprüche 5 bis 7, **dadurch gekennzeichnet, dass** wahlweise die grafischen Objekte (120, 130, 140, 150, 160) aller zugeschalteten Komfortsysteme auf der Anzeigefläche (100) dargestellt werden.

## Claims

1. Display device for a vehicle equipped with multiple comfort systems that can be switched on and off as desired, having a display area (100) for displaying graphical objects (120, 130, 140, 150, 160), and having a control unit (90) for driving the display area (100), the control unit (90) being configured to receive data about consumptions of the comfort systems and to generate from these data graphic data for graphical objects (120, 130, 140, 150, 160) for the display area (100) that represent the consumptions, **characterized in that** the graphical object (120, 130, 140, 150, 160) of a comfort system that is switched on is formed as a section of an annular figure formed as a circular ring (220) and, if desired, the graphical object (120, 130, 140, 150, 160) of exactly one of the comfort systems that is switched on can be displayed so as to be emphasized optically as compared with the rest of the circular ring (220) on the display area (100), wherein the display device interacts with an operating element (110) or multiple operating elements in such a way that it is possible to switch over between the various items of consumption information.

2. Display device according to Claim 1, **characterized in that** the area content of the section in relation to the area content of the annular figure behaves in the same way as the consumption of the comfort system that is switched on in relation to the maximum consumption of all the comfort systems or in relation to the total consumption of all the comfort systems.

3. Display device according to one of the preceding claims, **characterized in that** the graphical objects (120, 130, 140, 150, 160) of all the comfort systems that are switched on are formed as sections of the annular figure.

4. Display device according to one of the preceding claims, **characterized in that**, if desired, the graphical objects (120, 130, 140, 150, 160) of all the comfort systems that are switched on can be displayed on the display area (100).

5. Method of displaying graphical objects (120, 130, 140, 150, 160) on a display area (100) in a vehicle equipped with multiple comfort systems that can be switched on and off as desired, in which data about consumptions of the comfort systems are received, graphical objects (120, 130, 140, 150, 160) representing graphic data for the consumptions are generated, the display area (100) is driven with these graphic data, **characterized in that** the graphical object (120, 130, 140, 150, 160) of a comfort system that is switched on is formed as a section of an annular figure formed as a circular ring (220) and, if desired, the graphical object (120, 130, 140, 150, 160) of exactly one of the comfort systems that is switched on is displayed so as to be emphasized optically as compared with the rest of the circular ring (220) on the display area (100), wherein the display device interacts with an operating element (110) or multiple operating elements in such a way that it is possible to switch over between the various items of consumption information.

6. Method according to Claim 5, **characterized in that** the area content of the section in relation to the area content of the annular figure behaves in the same way as the consumption of the comfort system that is switched on in relation to the maximum consumption of all the comfort systems or in relation to the total consumption of all the comfort systems.

7. Method according to either of Claims 5 and 6, **characterized in that** the graphical objects (120, 130, 140, 150, 160) of all the comfort systems that are switched on are formed as sections of the annular figure.

8. Method according to one of Claims 5 to 7, **characterized in that**, if desired, the graphical objects (120, 130, 140, 150, 160) of all the comfort systems that are switched on are displayed on the display area (100).

## Revendications

1. Dispositif d'affichage pour un véhicule équipé de plusieurs systèmes de confort pouvant être sélectivement mis en circuit et hors circuit, comprenant une surface d'affichage (100) servant à représenter des objets graphiques (120, 130, 140, 150, 160) et comprenant une unité de commande (90) destinée à piloter la surface d'affichage (100), l'unité de commande (90) étant conçue pour recevoir des données relatives aux consommations des systèmes de confort et, à partir de ces données, générer pour la surface d'affichage (100) des données graphiques pour les objets graphiques (120, 130, 140, 150, 160) représentant les consommations, **caractérisé en ce que** l'objet graphique (120, 130, 140, 150, 160) d'un système de confort mis en circuit est réalisé sous la forme d'une portion d'une figure annulaire réalisée sous la forme d'un anneau circulaire (220) et l'objet graphique (120, 130, 140, 150, 160) de précisément l'un des systèmes de confort mis en circuit peut être représenté sélectivement sur la surface d'affichage (100) en étant mis en valeur visuellement par rapport au reste de l'anneau circulaire (220), le dispositif d'affichage coopérant avec un élément de commande (110) ou avec plusieurs éléments de commande de telle sorte que différentes informations de consommation peuvent être échangées entre eux.

2. Dispositif d'affichage selon la revendication 1, **caractérisé en ce que** la superficie de la portion se comporte par rapport à la superficie de la figure annulaire de la même façon que la consommation du système de confort mis en circuit par rapport à la consommation maximale de tous les systèmes de confort ou la consommation totale de tous les systèmes de confort.

3. Dispositif d'affichage selon l'une des revendications précédentes, **caractérisé en ce que** les objets graphiques (120, 130, 140, 150, 160) de tous les systèmes de confort mis en circuit sont réalisés sous la forme de portions de la figure annulaire.

4. Dispositif d'affichage selon l'une des revendications précédentes, **caractérisé en ce que** les objets graphiques (120, 130, 140, 150, 160) de tous les systèmes de confort mis en circuit peuvent être représentés sélectivement sur la surface d'affichage (100).

5. Procédé pour représenter des objets graphiques (120, 130, 140, 150, 160) sur une surface d'affichage (100) dans un véhicule équipé de plusieurs systèmes de confort pouvant être sélectivement mis en circuit et hors circuit, avec lequel des données à propos des consommations des systèmes de confort sont reçues, des données graphiques pour les objets graphiques (120, 130, 140, 150, 160) représentant les consommations étant générées à partir de ces données, la surface d'affichage (100) étant pilotée avec ces données graphiques, **caractérisé en ce que** l'objet graphique (120, 130, 140, 150, 160) d'un système de confort mis en circuit est réalisé sous la forme d'une portion d'une figure annulaire réalisée sous la forme d'un anneau circulaire (220) et l'objet graphique (120, 130, 140, 150, 160) de précisément l'un des systèmes de confort mis en circuit peut être représenté sélectivement sur la surface d'affichage (100) en étant mis en valeur visuellement par rapport au reste de l'anneau circulaire (220), le dispositif d'affichage coopérant avec un élément de commande (110) ou avec plusieurs éléments de commande de telle sorte que différentes informations de consommation peuvent être échangées entre eux.

6. Procédé selon la revendication 5, **caractérisé en ce que** la superficie de la portion se comporte par rapport à la superficie de la figure annulaire de la même façon que la consommation du système de confort mis en circuit par rapport à la consommation maximale de tous les systèmes de confort ou la consommation totale de tous les systèmes de confort.

7. Procédé selon l'une des revendications 5 ou 6, **caractérisé en ce que** les objets graphiques (120, 130, 140, 150, 160) de tous les systèmes de confort mis en circuit sont réalisés sous la forme de portions de la figure annulaire.

8. Procédé selon l'une des revendications 5 à 7, **caractérisé en ce que** les objets graphiques (120, 130, 140, 150, 160) de tous les systèmes de confort mis en circuit peuvent être représentés sélectivement sur la surface d'affichage (100).
